# EUROPEAN PATENT APPLICATION

(11) **EP 4 712 696 A1**
(43) Date of publication of application: **18.03.2026**
(21) Application number: 24806500.5
(22) Date of filing: 11.05.2024
(51) Int. Cl.: H05B 6/66, H05B 6/68

(54) **DRIVING POWER SOURCE AND CONTROL METHOD THEREFOR, AND HEATING APPARATUS AND MICROWAVE COOKING DEVICE**

(30) Priority: 16.05.2023 CN 202310555936
(71) Applicant: Guangdong Witol Vacuum Electronic Manufacture Co., Ltd, Foshan, Guangdong 528311 (CN)
(72) Inventor: TAKASHIGE, Yutaka, Foshan, Guangdong 528311 (CN); LI, Qinghai, Foshan, Guangdong 528311 (CN); WANG, Fubao, Foshan, Guangdong 528311 (CN); GAO, Wei, Foshan, Guangdong 528311 (CN); LIU, Xinghua, Foshan, Guangdong 528311 (CN); XU, Xiaoping, Foshan, Guangdong 528311 (CN); CHEN, Fei, Foshan, Guangdong 528311 (CN)
(74) Representative: RGTH
(86) International application number: PCT/CN2024/092560
(87) International publication number: WO 2024/235148

(57) **Abstract**

Provided is a driving power supply (100) and a control method therefor, a heating device (1000), and a microwave cooking appliance. The driving power supply (100) includes a rectification filtering circuit (10), a frequency conversion circuit (20), and a processing circuit (30). The frequency conversion circuit (20) includes a transformer (21) and a switching device (22) connected to a primary coil (211). A secondary coil (212) is connected to a magnetron (200). The rectification filtering circuit (10) is connected to an alternating-current power supply (300), and the primary coil (211) is connected to the rectification filtering circuit (10). The processing circuit (30) controls the switching device (22) to be turned on or turned off, and is configured to, in response to an electrical parameter of the switching device (22) meeting a predetermined condition, determine that the magnetron (200) is in an over-temperature state and adjust the electrical parameter to bring the magnetron (200) into a non-over-temperature state.

## Description

### CROSS-REFERENCE TO RELATED APPLICATIONS

This application claims the priority and benefit to Chinese Patent Applications No. 202310555936.X, filed on May 16, 2023 with China National Intellectual Property Administration, the entire contents of which are incorporated herein by reference.

### FIELD

The present disclosure relates to the technical field of kitchen appliances, and in particular, to a driving power supply, a control method therefor, a heating device, and a microwave cooking appliance.

### BACKGROUND

Currently, a microwave oven comprises a magnetron that is configured to generate microwaves for heating food. A temperature of the magnetron rises during operation of the magnetron. Compared with a case that the magnetron operates under a normal operating condition, the magnetron may be in an over-temperature state when operating under a harsh condition (such as operating in an enclosed state in a narrow kitchen where air intake and exhaust spaces cannot be guaranteed, or operating in a no-load state inside a cavity). The magnetron operating in the over-temperature state may has a reduced service life.

### SUMMARY

Embodiments of the present disclosure provide a driving power supply and a control method therefor, a heating device, and a microwave cooking appliance.

The embodiments of the present disclosure provide a driving power supply for supplying power to a magnetron. The driving power supply comprises a rectification filtering circuit, a frequency conversion circuit, and a processing circuit. The frequency conversion circuit comprises a transformer and a switching device. The transformer comprises a primary coil and a secondary coil. The switching device is connected to the primary coil, and the secondary coil is configured to be connected to the magnetron; the rectification filtering circuit is configured to be connected to an alternating-current power supply, and the primary coil is connected to the rectification filtering circuit; and the processing circuit is connected to the frequency conversion circuit and configured to control the switching device to be turned on or off. The processing circuit is configured to: detect an electrical parameter of the switching device; and in response to the electrical parameter of the switching device meeting a predetermined condition, determine that the magnetron is in an over-temperature state and adjust the electrical parameter of the switching device to bring the magnetron into a non-over-temperature state.

The above-mentioned driving power supply determines that the magnetron is in the over-temperature state by detecting the electrical parameter of the switching device, and adjusts the electrical parameter of the switching device to bring the magnetron into the non-over-temperature state. In this way, the magnetron can be prevented from operating in the over-temperature state for a long time, and a service life of the magnetron can be prolonged.

In some embodiments, the electrical parameter of the switching device comprises a voltage of the switching device.

In this way, the driving power supply can observe the voltage of the switching device through a voltage detection circuit to determine a magnitude of the operating voltage of the magnetron, and further determine a temperature state of the magnetron.

In some embodiments, the switching device comprises a triode comprising a collector. The voltage of the switching device comprises a voltage of the collector; and the processing circuit comprises a voltage detection circuit and an arithmetic circuit connected to the voltage detection circuit. The voltage detection circuit is connected to the collector. The voltage detection circuit is configured to detect the voltage of the collector, and the arithmetic circuit is configured to, in response to the voltage of the collector meeting the predetermined condition, determine that the magnetron is in the over-temperature state and adjust the voltage of the collector to bring the magnetron into the non-over-temperature state.

In this way, the arithmetic circuit determines that the magnetron is in the over-temperature state based on the voltage of the collector of the switching device, and then adjusts the voltage of the collector to ensure normal operation of the magnetron.

In some embodiments, the electrical parameter of the switching device comprises a conduction pulse width of the switching device.

In this way, the driving power supply can observe the conduction pulse width of the switching device through a frequency detection circuit to determine the magnitude of the operating voltage of the magnetron, and further determine the temperature state of the magnetron.

In some embodiments, the processing circuit comprises a frequency detection circuit and an arithmetic circuit connected to the frequency detection circuit. The frequency detection circuit is connected to the switching device. The frequency detection circuit is configured to detect the conduction pulse width of the switching device, and the arithmetic circuit is configured to, in response to the conduction pulse width of the switching device meeting the predetermined condition, determine that the magnetron is in the over-temperature state and adjust the conduction pulse width of the switching device to bring the magnetron into the non-over-temperature state.

In this way, the arithmetic circuit determines that the magnetron is in the over-temperature state based on the conduction pulse width of the switching device, and then adjusts the conduction pulse width of the switching device to ensure the normal operation of the magnetron.

In some embodiments, the processing circuit is configured to determine an operating voltage of the magnetron and correct the operating voltage of the magnetron according to the electrical parameter of the switching device, and determine, in response to the corrected operating voltage of the magnetron meeting the predetermined condition, that the magnetron is in the over-temperature state.

In this way, the processing circuit indirectly determines the temperature state of the magnetron based on the electrical parameter of the switching device to correct the operating voltage of the magnetron, and further improve control accuracy of the magnetron.

The embodiments of the present disclosure provide a heating device. The heating device comprises a magnetron and the driving power supply according to any one of the above embodiments. The magnetron is connected to the secondary coil.

In the above-mentioned heating device, it is determined that the magnetron is in the over-temperature state by detecting the electrical parameter of the switching device, and the electrical parameter of the switching device is adjusted to bring the magnetron into the non-over-temperature state. In this way, the magnetron can be prevented from operating in the over-temperature state for a long time, and the service life of the magnetron can be prolonged.

The embodiments of the present disclosure provide a microwave cooking appliance. The microwave cooking appliance comprises the heating device according to the above embodiments.

In the above-mentioned microwave cooking appliance, it is determined that the magnetron is in the over-temperature state by detecting the electrical parameter of the switching device, and the electrical parameter of the switching device is adjusted to bring the magnetron into the non-over-temperature state. In this way, the magnetron can be prevented from operating in the over-temperature state for a long time, and the service life of the magnetron can be prolonged.

The embodiments of the present disclosure provide a control method for a driving power supply. The driving power supply comprises a rectification filtering circuit and a frequency conversion circuit. The frequency conversion circuit comprises a transformer and a switching device. The transformer comprises a primary coil and a secondary coil. The switching device is connected to the primary coil, and the secondary coil is configured to be connected to a magnetron; and the rectification filtering circuit is configured to be connected to an alternating-current power supply, and the primary coil is connected to the rectification filtering circuit; and the control method comprises: detecting an electrical parameter of the switching device; and in response to the electrical parameter of the switching device meeting a predetermined condition, determining that the magnetron is in an over-temperature state and adjusting the electrical parameter of the switching device to bring the magnetron into a non-over-temperature state.

In the above-mentioned control method for the driving power supply, it is determined that the magnetron is in the over-temperature state by detecting the electrical parameter of the switching device, and the electrical parameter of the switching device is adjusted to bring the magnetron into the non-over-temperature state. In this way, the magnetron can be prevented from operating in the over-temperature state for a long time, and the service life of the magnetron can be prolonged.

In some embodiments, the control method comprises: determining an operating voltage of the magnetron and correcting the operating voltage of the magnetron according to the electrical parameter of the switching device; and determining that the magnetron is in the over-temperature state in response to the corrected operating voltage of the magnetron meeting the predetermined condition.

In this way, the control method for the driving power supply indirectly determines the temperature state of the magnetron based on the electrical parameter of the switching device to correct the operating voltage of the magnetron, and further improve the control accuracy of the magnetron.

Additional aspects and advantages of the present disclosure will be provided in part in the following description, or will become apparent in part from the following description, or can be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings, in which:
FIG. 1 is a circuit diagram of a driving power supply according to an embodiment of the present disclosure;
FIG. 2 is another circuit diagram of a driving power supply according to an embodiment of the present disclosure;
FIG. 3 is an operating waveform diagram of a magnetron in a low-temperature state according to an embodiment of the present disclosure;
FIG. 4 is an operating waveform diagram of a magnetron in a high-temperature state according to an embodiment of the present disclosure;
FIG. 5 is a waveform diagram of an alternating-current power supply according to an embodiment of the present disclosure;
FIG. 6 is an operating waveform diagram of a frequency conversion circuit when a magnetron is in a low-temperature state according to an embodiment of the present disclosure;
FIG. 7 is an operating waveform diagram of a frequency conversion circuit when a magnetron is in a high-temperature state according to an embodiment of the present disclosure;
FIG. 8 and FIG. 9 are schematic flowcharts of a control method for a driving power supply according to an embodiment of the present disclosure; and
FIG. 10 is a circuit diagram of a driving power supply in the related art.

Reference Signs of main components: driving power supply-100, magnetron-200, alternating-current power supply-300, rectification filtering circuit-10, frequency conversion circuit-20, processing circuit-30, high-voltage rectification circuit-40, inductor-11, filtering capacitor-12, transformer-21, switching device-22, resonant capacitor-23, voltage detection circuit-31, arithmetic circuit-32, frequency detection circuit-33, power supply voltage detection circuit-34, primary coil-211, secondary coil-212, heating device-1000.

### DETAILED DESCRIPTION

The embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

In the description of the present disclosure, it should be understood that, the orientation or the position indicated by terms such as "center", "longitudinal", "lateral", "length", "width", "thickness", "over", "below", "front", "rear", "left", "right", "vertical", "horizontal", "top", "bottom", "inner", "outer", "clockwise", and "counterclockwise" should be construed to refer to the orientation and the position as shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure. In the description of the present disclosure, "plurality of" means at least two, such as two, three, etc., unless otherwise specifically defined.

In the description of the present disclosure, it should be noted that, unless otherwise clearly specified and limited, terms such as "install", "connect", "connect to", and the like should be understood in a broad sense. For example, it may be a fixed connection or a detachable connection or connection as one piece; mechanical connection or electrical connection; direct connection or indirect connection through an intermediate; internal communication of two components or the interaction relationship between two components. For those skilled in the art, the specific meaning of the above-mentioned terms in the embodiments of the present disclosure can be understood according to specific circumstances.

In the present disclosure, unless expressly stipulated and defined otherwise, the first feature "on" or "under" the second feature may mean that the first feature is in direct contact with the second feature, or the first and second features are in indirect contact through an intermediate. Moreover, the first feature "above" the second feature may mean that the first feature is directly above or obliquely above the second feature, or simply mean that the level of the first feature is higher than that of the second feature. The first feature "below" the second feature may mean that the first feature is directly below or obliquely below the second feature, or simply mean that the level of the first feature is smaller than that of the second feature.

Various embodiments or examples for implementing different structures of the present disclosure are provided in the present disclosure. In order to simplify the description of the present disclosure, components and configurations of specific examples are described herein. These specific examples are merely for the purpose of illustration, rather than limiting the present disclosure. In addition, the same reference numerals and/or reference letters may appear in different examples of the present disclosure for the purpose of simplicity and clarity, instead of indicating a relationship between different embodiments and/or the discussed configurations. In addition, the present disclosure provides examples of various specific processes and materials. However, applications of other processes and/or the use of other materials are conceivable for those of ordinary skill in the art.

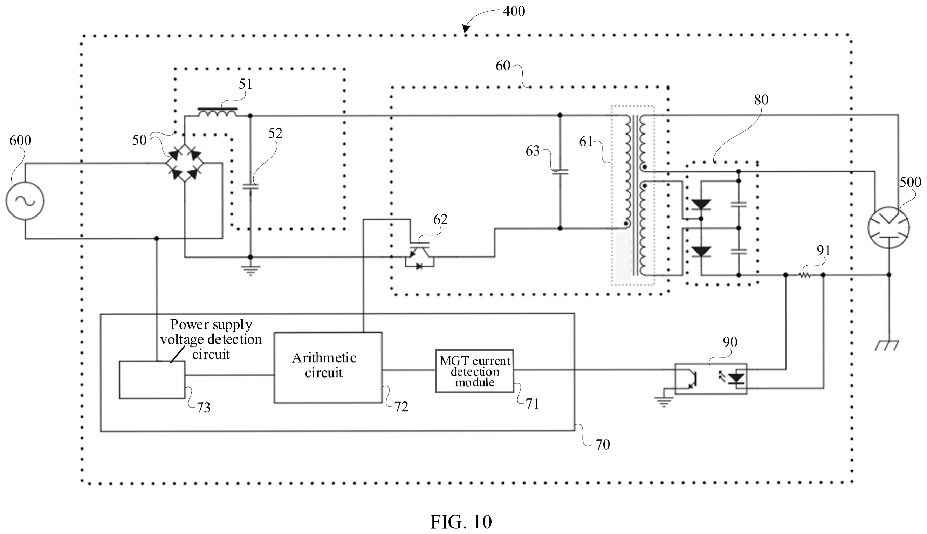

In the related art, referring to FIG. 10, FIG. 10 is a circuit diagram of a driving power supply 400 in the related art. As shown in FIG. 10, the driving power supply 400 adds an isolated optocoupler 90 and a current detection resistor 91 to obtain a current change of the magnetron 500 through an MGT current detection module 71, and then controls a temperature of the magnetron 500 through a control circuit 70. The above solution uses many components, which makes a related microwave cooking appliance such as a microwave oven to have a complex structure and a high cost.

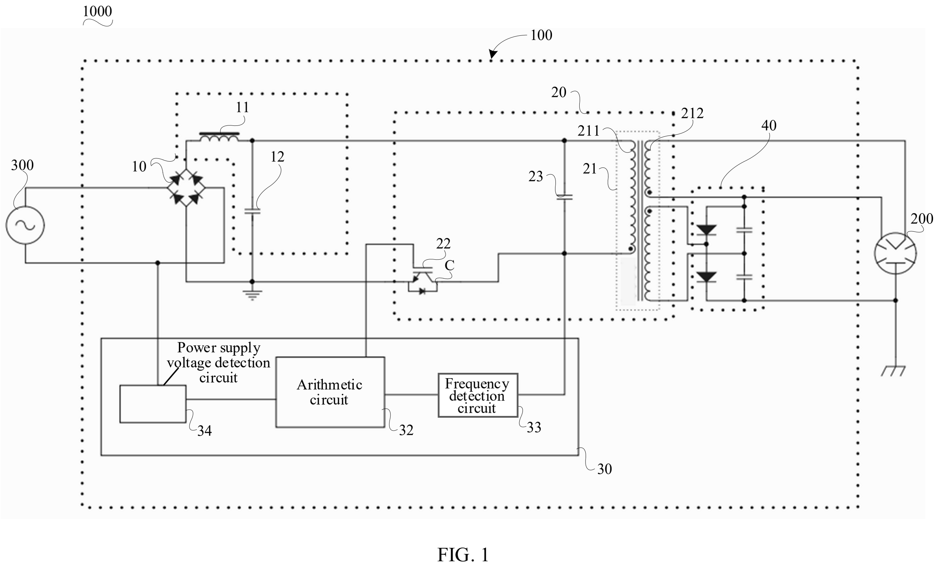

Referring to FIG. 1 to FIG. 5, a driving power supply 100 provided by the embodiments of the present disclosure is configured to supply power to a magnetron 200. The driving power supply 100 comprises a rectification filtering circuit 10, a frequency conversion circuit 20, and a processing circuit 30.

The frequency conversion circuit 20 comprises a transformer 21 and a switching device 22. The transformer 21 comprises a primary coil 211 and a secondary coil 212. The switching device 22 is connected to the primary coil 211, and the secondary coil 212 is configured to be connected to the magnetron 200. The rectification filtering circuit 10 is configured to be connected to an alternating-current power supply 300, and the primary coil 211 is connected to the rectification filtering circuit 10. The processing circuit 30 is connected to the frequency conversion circuit 20 and configured to control the switching device 22 to be turned on or turned off. The processing circuit 30 is configured to: detect an electrical parameter of the switching device 22; and in response to the electrical parameter of the switching device 22 meeting a predetermined condition, determine that the magnetron 200 is in an over-temperature state and adjust the electrical parameter of the switching device 22 to bring the magnetron 200 into a non-over-temperature state.

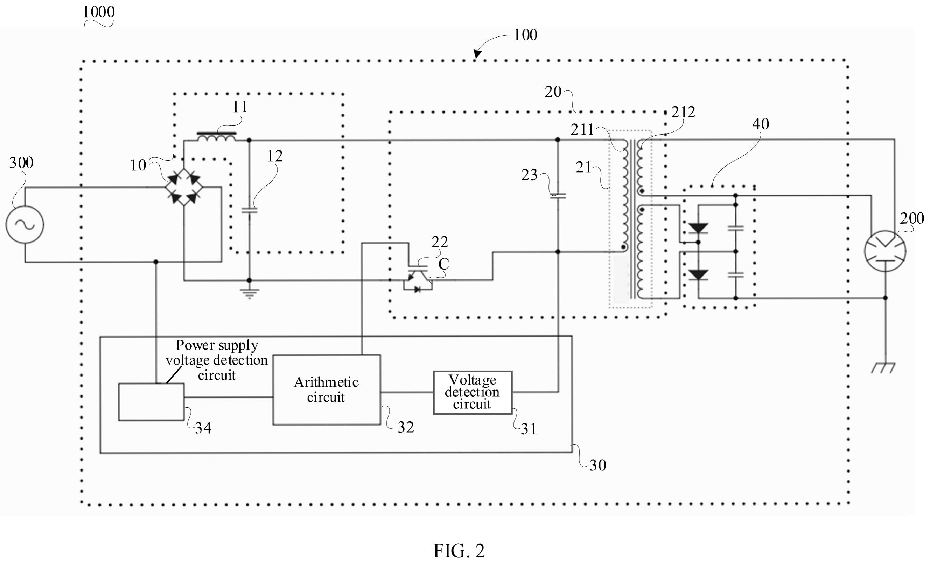

Referring to FIG. 1 and FIG. 2, the embodiments of the present disclosure further provide a heating device 1000. The heating device 1000 comprises a magnetron 200 and the driving power supply 100 according to the above embodiments. The magnetron 200 is connected to the secondary coil 212.

In the above-mentioned driving power supply 100 and heating device 1000, it is determined that the magnetron 200 is in the over-temperature state by detecting the electrical parameter of the switching device 22, and the electrical parameter of the switching device 22 is adjusted to bring the magnetron 200 into the non-over-temperature state. In this way, the magnetron 200 can be prevented from operating in the over-temperature state for a long time and a service life of the magnetron 200 is prolonged.

In an exemplary embodiment of the present disclosure, the rectification filtering circuit 10 may comprise a rectification circuit and a filtering circuit. The rectification circuit is mainly composed of rectifier diodes. In an embodiment, the number of rectifier diodes may be 4 to form a rectifier bridge. In other embodiments, the number of rectifier diodes may also be other numbers, which are not specifically limited herein. The rectification circuit is configured to convert a voltage outputted by the alternating-current power supply 300 into a direct current. The filtering circuit is connected to the rectification circuit and the frequency conversion circuit 20, and comprises an inductor 11 and a filtering capacitor 12. The voltage rectified by the rectification circuit is filtered by the inductor 11 and the filtering capacitor 12. The filtering circuit is configured to reduce an alternating-current voltage component of the direct current outputted by the rectification circuit as much as possible and retain a direct-current voltage component of the direct current outputted by the rectification circuit, which makes the filtered output voltage more stable.

The transformer 21 may be a boosting transformer that is configured to boost a voltage transmitted from the rectification filtering circuit 10 to the frequency conversion circuit 20 for supplying power to the magnetron 200.

The magnetron 200 is configured to generate microwaves and heat food by releasing high-frequency output power. It is worth noting that an operating voltage Eb of the magnetron 200 decreases as the temperature of the magnetron 200 rises.

In an embodiment, high-frequency output power W of the magnetron 200 remains unchanged. It is assumed that a normal temperature range of the magnetron 200 is [25°C, 100°C], and the operating voltage Eb of the magnetron 200 decreases as the temperature of the magnetron 200 rises. The magnetron 200 being in a low-temperature state may be understood as the magnetron 200 being in a room temperature, and the temperature of the magnetron 200 is a room temperature (such as 25°C). The magnetron 200 being in a high-temperature state may be understood as the temperature of the magnetron 200 being within the normal temperature range, such as (25°C, 100°C]. The magnetron 200 being in the over-temperature state may be understood as the temperature of the magnetron 200 exceeding the normal temperature range, such as greater than 100°C.

It can be known from a formula W=Eb*lb for the high-frequency output power W of the magnetron 200 that the magnetron 200 starts operating from the low-temperature state, and its temperature gradually rises, causing the operating voltage Eb of the magnetron 200 to decrease. Moreover, the high-frequency output power W of the magnetron 200 remains unchanged, and thus an operating current Ib of the magnetron 200 increases. The above example is only for the purpose of understanding and shall not limit a practical application of the embodiments of the present disclosure.

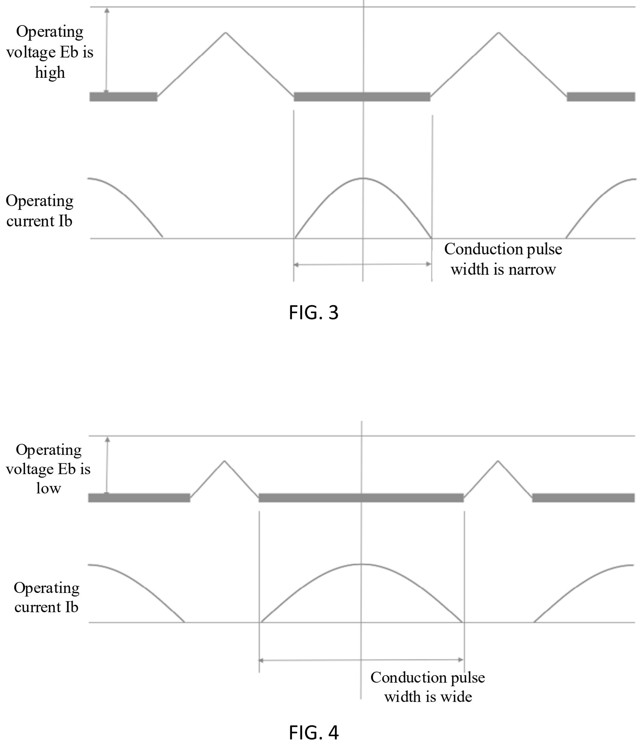

Referring to FIG. 3 and FIG. 4, FIG. 3 shows a state where the operating voltage Eb is relatively large and has a relatively high waveform when the magnetron 200 is in the low-temperature state (i.e., the room temperature state). Moreover, the high-frequency output power W of the magnetron 200 remains unchanged. In this case, the operating current Ib is relatively small and has a relatively narrow waveform. Compared with FIG. 3, FIG. 4 shows a state where the operating voltage Eb is relatively small and has a relatively low waveform when the magnetron 200 is in the high-temperature state. Moreover, the high-frequency output power W of the magnetron 200 remains unchanged. In this case, the operating current Ib is relatively large and has a relatively wide waveform.

In an embodiment, the electrical parameter of the switching device 22 is in a positively correlated relationship with the operating voltage Eb of the magnetron 200. The relationship between the electrical parameter of the switching device 22 and the operating voltage Eb of the magnetron 200 may be obtained in advance through simulations and tests in multiple times. That is, when the electrical parameter of the switching device 22 is relatively large, the operating voltage Eb of the magnetron 200 is also relatively large. When the electrical parameter of the switching device 22 is relatively small, the operating voltage Eb of the magnetron 200 is also relatively small.

Based on the above analysis, the electrical parameter of the switching device 22 is in a negatively correlated relationship with the temperature of the magnetron 200. In detail, when the electrical parameter of the switching device 22 increases, the operating voltage Eb of the magnetron 200 increases, and thus it can be determined that the temperature of the magnetron 200 decreases. When the electrical parameter of the switching device 22 decreases, the operating voltage Eb of the magnetron 200 decreases, and thus it can be determined that the temperature of the magnetron 200 increases.

The electrical parameter of the switching device 22 may be a conduction pulse width of the switching device 22, a voltage of the switching device 22, or other parameters, and is not specifically limited herein. As shown in FIG. 1, the conduction pulse width of the switching device 22 may be detected by a frequency detection circuit 33. As shown in FIG. 2, the voltage of the switching device 22 may be detected by a voltage detection circuit 31.

In an embodiment, the predetermined condition may be that a value of the electrical parameter is smaller than a lower limiting value of a predetermined electrical parameter range. That is, the operating voltage Eb of the magnetron 200 is smaller than a lower limiting value of the predetermined operating voltage range. In this case, a corresponding temperature of the magnetron 200 is greater than an upper limiting value of a predetermined temperature range, and it is determined that the magnetron 200 is in the over-temperature state.

When an electrical parameter of the switching device 22 collected in real time meets the predetermined condition, it may be determined that the magnetron 200 is in the over-temperature state. The processing circuit 30 may increase the value of the electrical parameter of the switching device 22 to make the value of the electrical parameter be greater than or equal to the lower limiting value of the predetermined electrical parameter range. In this way, the operating voltage Eb of the magnetron 200 is greater than or equal to the lower limiting value of the predetermined operating voltage range, and thus the temperature of the magnetron 200 is smaller than or equal to the upper limiting value of the predetermined temperature range, bringing the magnetron 200 into the non-over-temperature state.

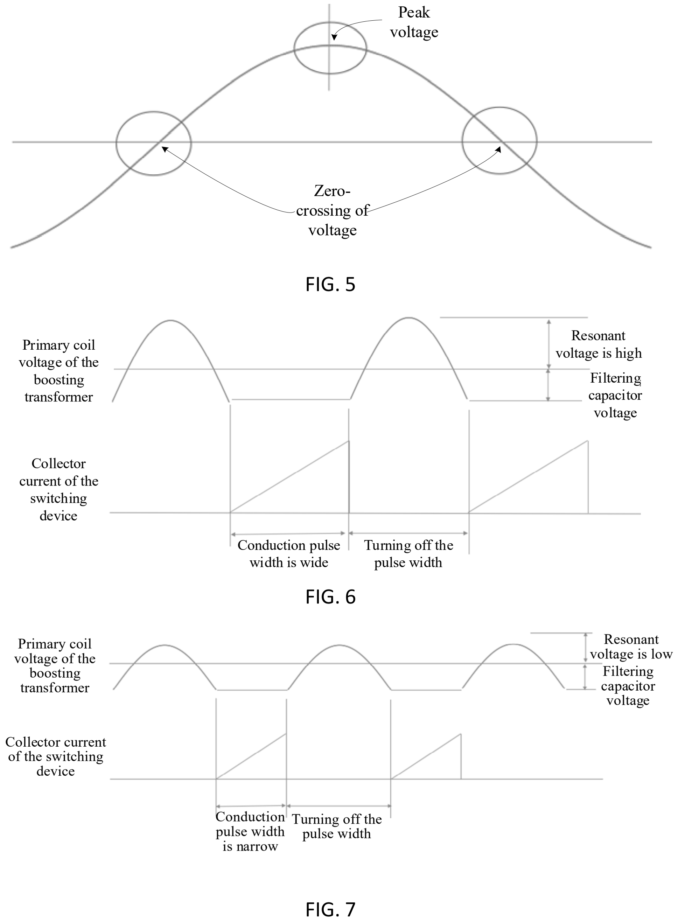

In an embodiment, referring to FIG. 5, FIG. 5 is a sine waveform diagram of the alternating-current power supply 300. A low-voltage part of the alternating-current power supply 300 near 0V is relatively small, and is insufficient to reach the operating voltage Eb of the magnetron 200. Therefore, there is no time period in the sine waveform diagram of the alternating-current power supply 300 where the operating current Ib of the magnetron 200 flows. The driving power supply 100 turns on and/or off the switching device 22 to make the frequency conversion circuit 20 generate a resonant phenomenon. A voltage of the primary coil 211 of the transformer 21 rises to induce the secondary coil 212 of the transformer 21 to generate a high voltage. That is, the transformer 21 of the frequency conversion circuit 20 may boost the alternating-current power supply 300, and the boosted voltage may reach the operating voltage Eb of the magnetron 200 to drive the magnetron 200 to operate.

In an embodiment, the frequency conversion circuit 20 further comprises a resonant capacitor 23. The resonant capacitor 23 and the primary coil 211 form a resonant circuit. The switching device 22 may be a triode. When the switching device 22 is turned on, a current flows through the primary coil 211 of the transformer 21. When the switching device 22 is turned off, the primary coil 211 of the transformer 21 releases the stored energy to the resonant capacitor 23 to form the resonant phenomenon.

In an embodiment, the driving power supply 100 further comprises a high-voltage rectification circuit 40. The high-voltage rectification circuit 40 is connected to the secondary coil 212 of the transformer 21 and the magnetron 200, and is configured to rectify and filter the boosted voltage of the secondary coil 212 to drive the magnetron 200 to operate.

In some embodiments, the electrical parameter of the switching device 22 comprises a voltage of the switching device 22.

In this way, the driving power supply 100 can observe the voltage of the switching device 22 through the voltage detection circuit 31 to determine a magnitude of the operating voltage Eb of the magnetron 200, and further determine a temperature state of the magnetron 200.

In an exemplary embodiment of the present disclosure, when the electrical parameter of the switching device 22 is the voltage of the switching device 22, the voltage of the switching device 22 may be detected by the voltage detection circuit 31.

In an embodiment, the switching device 22 is a triode. A voltage of a collector C of the triode is positively correlated with the voltage of the primary coil 211 of the transformer 21. Moreover, as the temperature of the magnetron 200 rises, the operating voltage Eb of the magnetron 200 decreases, and the voltage of the collector C decreases. That is, the driving power supply 100 may observe a voltage value of the collector C through the voltage detection circuit 31 to determine the magnitude of the operating voltage Eb of the magnetron 200, and further determine whether the magnetron 200 is in the over-temperature state.

In detail, when the electrical parameter of the switching device 22 is the voltage value of the collector C, it is assumed that a lower limiting value of a predetermined voltage range of the collector C is 180V, the lower limiting value of the predetermined operating voltage range of the magnetron 200 is 90V, and the upper limiting value of the predetermined temperature range of the magnetron 200 is 120°C. When it is observed that a current voltage of the collector C is smaller than 180V, i.e., the operating voltage Eb of the magnetron 200 is smaller than 90V, it is considered that the temperature of the magnetron 200 is greater than 120°C. In this case, the magnetron 200 is in the over-temperature state. The processing circuit 30 may increase the voltage of the collector C of the switching device 22 to make the voltage of the collector C be greater than or equal to the lower limiting value of the predetermined voltage range. In this way, the operating voltage Eb of the magnetron 200 is greater than or equal to the lower limiting value of the predetermined operating voltage range, and thus the temperature of the magnetron 200 is reduced to ensure that the magnetron 200 is in the non-over-temperature state. The above example is only for the purpose of understanding and shall not limit the practical application of the embodiments of the present disclosure.

Referring to FIG. 2, in some embodiments, the switching device 22 comprises a triode comprising a collector C. The voltage of the switching device 22 comprises a voltage of the collector C. The processing circuit 30 comprises a voltage detection circuit 31 and an arithmetic circuit 32 connected to the voltage detection circuit 31. The voltage detection circuit 31 is connected to the collector C. The voltage detection circuit 31 is configured to detect the voltage of the collector C, and the arithmetic circuit 32 is configured to, in response to the voltage of the collector C meeting the predetermined condition, determine that the magnetron 200 is in the over-temperature state and adjust the voltage of the collector C to bring the magnetron 200 into the non-over-temperature state.

In this way, the arithmetic circuit 32 determines that the magnetron 200 is in the over-temperature state based on the voltage of the collector C of the switching device 22, and then adjusts the voltage of the collector C to ensure normal operation of the magnetron 200.

In an exemplary embodiment of the present disclosure, the voltage detection circuit 31 is connected to the collector C of the switching device 22 and the arithmetic circuit 32, and is configured to detect voltage data of the collector C and transmit it to the arithmetic circuit 32.

In an embodiment, the processing circuit 30 further comprises a power supply voltage detection circuit 34. The power supply voltage detection circuit 34 is configured to detect voltage data of the alternating-current power supply 300 and transmit it to the arithmetic circuit 32 to ensure normal operation of the driving power supply 100.

In response to the voltage of the collector C of the switching device 22 meeting the predetermined condition, for example, it is assumed that the lower limiting value of the predetermined voltage range of the collector C is 180V, the lower limiting value of the predetermined operating voltage range of the magnetron 200 is 90V, and the upper limiting value of the predetermined temperature range of the magnetron 200 is 120°C. When the voltage detection circuit 31 detects that a current voltage value of the collector C is 170V, the operating voltage Eb of the magnetron 200 is 80V, and the temperature value of the magnetron 200 is 130°C. That is, when the voltage value of the collector C is smaller than the lower limiting value of the predetermined voltage range of the collector C, and the operating voltage Eb of the magnetron 200 is smaller than the lower limiting value of the predetermined operating voltage range of the magnetron 200, it is considered that the temperature value of the magnetron 200 is greater than the upper limiting value of the predetermined temperature range of the magnetron 200. In this case, the magnetron 200 is in the over-temperature state. The above example is only for the purpose of understanding and shall not limit the practical application of the embodiments of the present disclosure.

The processing circuit 30 may adjust the temperature state of the magnetron 200 by observing and adjusting the voltage value of the collector C of the switching device 22, reducing a long-term high-temperature operation process of the magnetron 200. In detail, in response to determining that the magnetron 200 is in the over-temperature state, the processing circuit 30 may control the switching device 22 to be turned off through the arithmetic circuit 32, which allows a resonant voltage generated by the frequency conversion circuit 20 to increase, and the voltage of the collector C to increase, to induce a voltage of the secondary coil 212 of the transformer 21 to increase. In this way, the operating voltage Eb of the magnetron 200 can be increased to bring the magnetron 200 into the non-over-temperature state.

In an embodiment, a relationship between the voltage of the collector C of the switching device 22, the operating voltage Eb of the magnetron 200, and the temperature of the magnetron 200 may be obtained in advance based on data from simulations and tests in multiple times and may be stored in the arithmetic circuit 32. That is, the driving power supply 100 may obtain a test data set of the voltage of the collector C, the operating voltage Eb of the magnetron 200, and the temperature of the magnetron 200 based on data tests in multiple times. The voltage value of the collector C, the operating voltage Eb value of the magnetron 200, and the temperature value of the magnetron 200 are in one-to-one correspondence, to facilitate quick determination of whether the magnetron 200 is in the over-temperature state based on the test data set.

Referring to FIG. 6 and FIG. 7, in some embodiments, the electrical parameter of the switching device 22 comprises a conduction pulse width of the switching device 22.

In this way, the driving power supply 100 can observe the conduction pulse width of the switching device 22 through the frequency detection circuit 33 to determine the magnitude of the operating voltage Eb of the magnetron 200, and further determine the temperature state of the magnetron 200.

In an exemplary embodiment of the present disclosure, in response to the electrical parameter of the switching device 22 being the conduction pulse width of the switching device 22, the conduction pulse width may be detected by the frequency detection circuit 33.

In an embodiment, as shown in FIG. 6, FIG. 6 is a schematic diagram of a current of the collector C of the switching device 22 and the voltage of the primary coil 211 of the transformer 21 when the magnetron 200 is in the low-temperature state (i.e., room temperature state). It can be known from a property of the magnetron that when the magnetron 200 is in the low-temperature state (i.e., room temperature state), the operating voltage Eb of the magnetron 200 is relatively large. As shown in FIG. 6, when the magnetron 200 is in the low-temperature state (i.e., room temperature state), the voltage of the primary coil 211 of the transformer 21 is relatively large, and the resonant voltage generated by the frequency conversion circuit 20 is relatively large, resulting in a relatively high voltage waveform of the primary coil 211 of the transformer 21 and a relatively wide conduction pulse width of the switching device 22. As the temperature of the magnetron 200 rises, the operating voltage Eb of the magnetron 200 decreases, and the conduction pulse width of the switching device 22 becomes narrower.

In another embodiment, as shown in FIG. 7, FIG. 7 is a schematic diagram of the current of the collector C of the switching device 22 and the voltage of the primary coil 211 of the transformer 21 when the magnetron 200 is in the high-temperature state. It can be known from the property of the magnetron that when the magnetron 200 is in the high-temperature state, the operating voltage Eb of the magnetron 200 is relatively small. As shown in FIG. 7, when the magnetron 200 is in the high-temperature state, the voltage of the primary coil 211 of the transformer 21 is relatively small, and the resonant voltage generated by the frequency conversion circuit 20 is relatively small, resulting in a relatively low voltage waveform of the primary coil 211 of the transformer 21 and a relatively narrow conduction pulse width of the switching device 22. That is, the driving power supply 100 may observe a width of the conduction pulse width of the switching device 22 through the frequency detection circuit 33 to determine the magnitude of the operating voltage Eb of the magnetron 200, and further determine whether the magnetron 200 is in the over-temperature state.

In detail, when the electrical parameter of the switching device 22 is the conduction pulse width, it is assumed that a lower limiting value of a predetermined conduction pulse width range of the switching device 22 is p, the lower limiting value of the predetermined operating voltage range of the magnetron 200 is 90V, and the upper limiting value of the predetermined temperature range of the magnetron 200 is 120°C. When it is observed that a current value of the conduction pulse width is smaller than p, i.e., the operating voltage Eb of the magnetron 200 is smaller than 90V, it is considered that the temperature of the magnetron 200 is greater than 120°C. In this case, the magnetron 200 is in the over-temperature state. The processing circuit 30 may increase the conduction pulse width of the switching device 22 to make the conduction pulse width be greater than or equal to the lower limiting value of the predetermined conduction pulse width range. In this way, the operating voltage Eb of the magnetron 200 is greater than or equal to the lower limiting value of the predetermined operating voltage range, and the temperature of the magnetron 200 is further reduced to ensure that the magnetron 200 is in the non-over-temperature state. The above example is only for the purpose of understanding and shall not limit the practical application of the embodiments of the present disclosure.

Referring to FIG. 1, in some embodiments, the processing circuit 30 comprises a frequency detection circuit 33 and an arithmetic circuit 32 connected to the frequency detection circuit 33. The frequency detection circuit 33 is connected to the switching device 22. The frequency detection circuit 33 is configured to detect the conduction pulse width of the switching device 22, and the arithmetic circuit 32 is configured to, in response to the conduction pulse width of the switching device 22 meeting the predetermined condition, determine that the magnetron 200 is in the over-temperature state and adjust the conduction pulse width of the switching device 22 to bring the magnetron 200 into the non-over-temperature state.

In this way, the arithmetic circuit 32 determines that the magnetron 200 is in the over-temperature state based on the conduction pulse width of the switching device 22, and then adjusts the conduction pulse width of the switching device 22 to ensure the normal operation of the magnetron 200.

In an exemplary embodiment of the present disclosure, the frequency detection circuit 33 is connected to the collector C of the switching device 22 and the arithmetic circuit 32, and is configured to detect the conduction pulse width of the switching device 22 and transmit it to the arithmetic circuit 32.

In response to the conduction pulse width of the switching device 22 meeting the predetermined condition, for example, it is assumed that a lower limiting value of a predetermined conduction pulse width range of the conduction pulse width is p, the lower limiting value of the predetermined operating voltage range of the magnetron 200 is 90V, and the upper limiting value of the predetermined temperature range of the magnetron 200 is 120°C. When the frequency detection circuit 33 detects that the current conduction pulse width is p, the operating voltage Eb of the magnetron 200 is 80V, and the temperature value of the magnetron 200 is 130°C. That is, when the conduction pulse width is smaller than the lower limiting value of the predetermined conduction pulse width range, and the operating voltage Eb of the magnetron 200 is smaller than the lower limiting value of the predetermined operating voltage range of the magnetron 200, it is considered that the temperature value of the magnetron 200 is greater than the upper limiting value of the predetermined temperature range of the magnetron 200. In this case, the magnetron 200 is in the over-temperature state. The above example is only for the purpose of understanding and shall not limit the practical application of the embodiments of the present disclosure.

The processing circuit 30 may adjust the temperature state of the magnetron 200 by observing and adjusting the conduction pulse width of the switching device 22, reducing the long-term high-temperature operation process of the magnetron 200. In detail, in response to determining that the magnetron 200 is in the over-temperature state, the processing circuit 30 may control the switching device 22 to be turned off through the arithmetic circuit 32, which allows the resonant voltage generated by the frequency conversion circuit 20 to increase, and the conduction pulse width of the switching device 22 to become wider, to induce the voltage of the secondary coil 212 of the transformer 21 to increase. In this way, the operating voltage Eb of the magnetron 200 can be increased to bring the magnetron 200 into the non-over-temperature state.

In an embodiment, a relationship between the conduction pulse width of the switching device 22, the operating voltage Eb of the magnetron 200, and the temperature of the magnetron 200 may be obtained in advance based on the data from simulations and tests in multiple times and may be stored in the arithmetic circuit 32. That is, the driving power supply 100 may obtain a test data set of the conduction pulse width of the switching device 22, the operating voltage Eb of the magnetron 200, and the temperature of the magnetron 200 based on data tests in multiple times. The conduction pulse width of the switching device 22, the operating voltage Eb value of the magnetron 200, and the temperature value of the magnetron 200 are in one-to-one correspondence, to facilitate the quick determination of whether the magnetron 200 is in the over-temperature state based on the test data set.

Referring to FIG. 1 and FIG. 2, in some embodiments, the processing circuit 30 is configured to determine the operating voltage Eb of the magnetron 200 and correct the operating voltage Eb of the magnetron 200 according to the electrical parameter of the switching device 22, and determine, in response to the corrected operating voltage Eb of the magnetron 200 meeting the predetermined condition, that the magnetron 200 is in an over-temperature state.

In this way, the processing circuit 30 indirectly determines the temperature state of the magnetron 200 based on the electrical parameter of the switching device 22 to correct the operating voltage Eb of the magnetron 200, and further improve control accuracy of the magnetron 200.

In an exemplary embodiment of the present disclosure, the embodiments of the present disclosure may determine a standard range of the electrical parameter of the switching device 22 in advance based on the data from simulations and tests in multiple times, and store it in the arithmetic circuit 32 in the form of a computer program, ensuring the normal operation of the magnetron 200.

The predetermined condition may comprise that the operating voltage Eb of the magnetron 200 is smaller than the lower limiting value (such as 90V) of the predetermined operating voltage range, and it can be determined that the magnetron 200 is in the over-temperature state. In detail, in response to the operating voltage Eb of the magnetron 200 being smaller than 90V, i.e., the operating voltage Eb of the magnetron 200 being smaller than the lower limiting value of the predetermined operating voltage range, it is considered that the temperature of the magnetron 200 is greater than the upper limiting value of the predetermined temperature range. In this case, the magnetron 200 is in the over-temperature state.

Since there is a 10% deviation value in upper and lower limit voltages of the operating voltage Eb of the magnetron 200 in the low-temperature state (i.e., room temperature state), this deviation causes a discrepancy between the operating voltage Eb of the magnetron 200 directly determined by the electrical parameter of the switching device 22 (such as the voltage of the collector C) and an actual operating voltage of the magnetron 200, resulting in inaccurate determination of the temperature state of the magnetron 200.

In this embodiment, the operating voltage Eb of the magnetron 200 is determined and corrected according to the electrical parameter of the switching device 22. In response to the corrected operating voltage Eb of the magnetron 200 meeting the predetermined condition, it is determined that the magnetron 200 is in the over-temperature state. In this way, determination of the temperature state of the magnetron 200 can be made more accurate, and the control accuracy of the magnetron 200 is improved.

For example, the 10% deviation mentioned above may be corrected to eliminate the deviation, making the corrected operating voltage Eb of the magnetron 200 be closer to the actual operating voltage of the magnetron 200. Then, the corrected operating voltage Eb of the magnetron 200 is compared with the predetermined condition, leading to more accurate control of the magnetron 200.

Similarly, a determination method for the conduction pulse width of the switching device 22 is similar to that for the voltage of the collector C, and details thereof are omitted herein for the avoidance of redundancy.

The arithmetic circuit 32 determines the operating voltage Eb of the magnetron 200 based on an electrical parameter of the switching device 22 monitored in real time. In response to the corrected operating voltage Eb of the magnetron 200 being smaller than the lower limiting value of the predetermined operating voltage range, it is determined that the magnetron 200 is in the over-temperature state.

The embodiments of the present disclosure provide a microwave cooking appliance. The microwave cooking appliance comprises the heating device 1000 according to the above-mentioned embodiments.

In the above-mentioned microwave cooking appliance, it is determined that the magnetron 200 is in the over-temperature state by detecting the electrical parameter of the switching device 22, and the electrical parameter of the switching device 22 is adjusted to bring the magnetron 200 into the non-over-temperature state. In this way, the magnetron 200 can be prevented from operating in the over-temperature state for a long time, and the service life of the magnetron 200 can be prolonged.

It should be noted that the above explanations regarding the embodiments and beneficial effects of the heating device 1000 are also applicable to the microwave cooking appliance of the embodiments of the present disclosure. To avoid redundancy, detailed elaboration is not provided herein.

In an embodiment, the microwave cooking appliance comprises, but is not limited to, a household appliance such as a microwave oven, an integrated microwave-steaming-baking machine, and a microwave rice cooker.

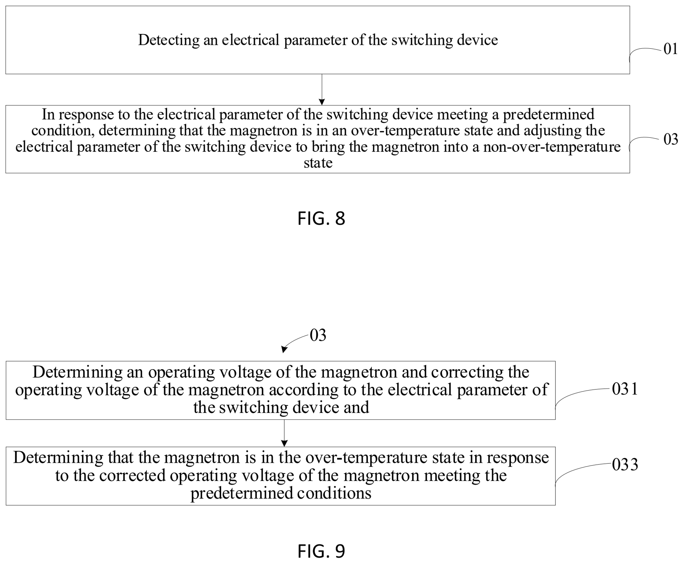

Referring to FIG. 8, the embodiments of the present disclosure provide a control method for a driving power supply 100. The driving power supply 100 comprises a rectification filtering circuit 10 and a frequency conversion circuit 20. The frequency conversion circuit 20 comprises a transformer 21 and a switching device 22. The transformer 21 comprises a primary coil 211 and a secondary coil 212. The switching device 22 is connected to the primary coil 211, and the secondary coil 212 is configured to be connected to a magnetron 200. The rectification filtering circuit 10 is configured to be connected to an alternating-current power supply 300, and the primary coil 211 is connected to the rectification filtering circuit 10. The control method comprises steps 01 and 03.

At step 01, an electrical parameter of the switching device 22 is detected.

At step 03, in response to the electrical parameter of the switching device 22 meeting a predetermined condition, it is determined that the magnetron 200 is in an over-temperature state, and the electrical parameter of the switching device 22 is adjusted to bring the magnetron 200 into a non-over-temperature state.

In the above-mentioned control method for the driving power supply 100, it is determined that the magnetron 200 is in the over-temperature state by detecting the electrical parameter of the switching device 22, and the electrical parameter of the switching device 22 is adjusted to bring the magnetron 200 into the non-over-temperature state. In this way, the magnetron 200 can be prevented from operating in the over-temperature state for a long time, and the service life of the magnetron 200 can be prolonged.

In an exemplary embodiment of the present disclosure, the electrical parameter of the switching device 22 may be the conduction pulse width of the switching device 22, the voltage value of the collector C of the switching device 22, or other parameters, and is not specifically limited herein. As shown in FIG. 1, the conduction pulse width of the switching device 22 may be detected by the frequency detection circuit 33. As shown in FIG. 2, the voltage value of the collector C of the switching device 22 may be detected by the voltage detection circuit 31.

In an embodiment, the predetermined condition may be that the value of the electrical parameter is smaller than the lower limiting value of the predetermined electrical parameter range of the switching device 22, i.e., the operating voltage Eb of the magnetron 200 is smaller than the lower limiting value of the predetermined operating voltage range. In this case, the corresponding temperature of the magnetron 200 is greater than the upper limiting value of the predetermined temperature range. When the electrical parameter of the switching device 22 collected in real time meets the predetermined condition, it can be determined that the magnetron 200 is in the over-temperature state. The processing circuit 30 may increase the value of the electrical parameter of the switching device 22 to bring the magnetron 200 into the non-over-temperature state, prolonging the service life of the magnetron 200.

Referring to FIG. 9, in some embodiments, the control method comprises steps 031 and 033.

At step 031, an operating voltage Eb of the magnetron 200 is determined and corrected according to the electrical parameter of the switching device 22.

At step 033, it is determined that the magnetron 200 is in the over-temperature state in response to the corrected operating voltage Eb of the magnetron 200 meeting the predetermined conditions.

In this way, the control method for the driving power supply 100 indirectly determines the temperature state of the magnetron 200 based on the electrical parameter of the switching device 22 to correct the operating voltage Eb of the magnetron 200, and further improve the control accuracy of the magnetron 200.

In an exemplary embodiment of the present disclosure, the embodiments of the present disclosure may determine the standard range of the electrical parameter of the switching device 22 in advance based on the data from simulations and tests in multiple times, and store it in the arithmetic circuit 32 in the form of the computer program to ensure the normal operation of the magnetron 200.

The predetermined condition may comprise that the operating voltage Eb of the magnetron 200 is smaller than the lower limiting value (such as 90V) of the predetermined operating voltage range, and it can be determined that the magnetron 200 is in the over-temperature state. In detail, in response to the operating voltage Eb of the magnetron 200 being smaller than 90V, i.e., the operating voltage Eb of the magnetron 200 being smaller than the lower limiting value of the predetermined operating voltage range, it is considered that the temperature of the magnetron 200 is greater than the upper limiting value of the predetermined temperature range. In this case, the magnetron 200 is in the over-temperature state.

Since there is a 10% deviation in the upper and lower limit voltages of the operating voltage Eb of the magnetron 200 in the low-temperature state (i.e., room temperature state), this deviation causes the discrepancy between the operating voltage Eb of the magnetron 200 directly determined by the electrical parameter of the switching device 22 (such as the voltage of the collector C) and the actual operating voltage of the magnetron 200, resulting in the inaccurate determination of the temperature state of the magnetron 200.

In this embodiment, the operating voltage Eb of the magnetron 200 is determined and corrected according to the electrical parameter of the switching device 22. In response to the corrected operating voltage Eb of the magnetron 200 meeting the predetermined condition, it is determined that the magnetron 200 is in the over-temperature state. In this way, the determination of the temperature state of the magnetron 200 can be made more accurate, and the control accuracy of the magnetron 200 is improved.

For example, the 10% deviation mentioned above may be corrected to eliminate the deviation, making the corrected operating voltage Eb of the magnetron 200 be closer to the actual operating voltage of the magnetron 200. Then, the corrected operating voltage Eb of the magnetron 200 is compared with the predetermined condition, leading to more accurate control of the magnetron 200.

Similarly, the determination method for the conduction pulse width of the switching device 22 is similar to that for the voltage of the collector C, and details thereof are omitted herein for the avoidance of redundancy.

The arithmetic circuit 32 determines the operating voltage Eb of the magnetron 200 based on the electrical parameter of the switching device 22 monitored in real time. In response to the corrected operating voltage Eb of the magnetron 200 being smaller than the lower limiting value of the predetermined operating voltage range, it is determined that the magnetron 200 is in the over-temperature state.

In the description of this specification, descriptions with reference to the terms "an embodiment", "some embodiments", "schematic embodiments", "examples", "specific examples", or "some examples", etc. mean that specific features, structure, materials, or characteristics described in conjunction with the embodiment or example are comprised in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner.

Although the embodiments of the present disclosure according to the present disclosure have been shown and described, it would be appreciated by those skilled in the art that changes, modifications, alternatives, and variations can be made in the above embodiments without departing from the principle and concept of the present disclosure. The scope of the present disclosure shall be defined by the claims as appended and their equivalents.

## Claims

1. A driving power supply for supplying power to a magnetron, wherein the driving power supply comprises a rectification filtering circuit, a frequency conversion circuit, and a processing circuit, wherein:
the frequency conversion circuit comprises a transformer and a switching device, wherein the transformer comprises a primary coil and a secondary coil, the switching device is connected to the primary coil, and the secondary coil is configured to be connected to the magnetron;
the rectification filtering circuit is configured to be connected to an alternating-current power supply, and the primary coil is connected to the rectification filtering circuit; and
the processing circuit is connected to the frequency conversion circuit and configured to control the switching device to be turned on or off,
wherein the processing circuit is configured to:
detect an electrical parameter of the switching device; and
in response to the electrical parameter of the switching device meeting a predetermined condition, determine that the magnetron is in an over-temperature state and adjust the electrical parameter of the switching device to bring the magnetron into a non-over-temperature state.

2. The driving power supply according to claim 1, wherein the electrical parameter of the switching device comprises a voltage of the switching device.

3. The driving power supply according to claim 2, wherein:
the switching device comprises a triode comprising a collector, wherein the voltage of the switching device comprises a voltage of the collector; and
the processing circuit comprises a voltage detection circuit and an arithmetic circuit connected to the voltage detection circuit, wherein the voltage detection circuit is connected to the collector, the voltage detection circuit is configured to detect the voltage of the collector, and the arithmetic circuit is configured to, in response to the voltage of the collector meeting the predetermined condition, determine that the magnetron is in the over-temperature state and adjust the voltage of the collector to bring the magnetron into the non-over-temperature state.

4. The driving power supply according to claim 1, wherein the electrical parameter of the switching device comprises a conduction pulse width of the switching device.

5. The driving power supply according to claim 4, wherein the processing circuit comprises a frequency detection circuit and an arithmetic circuit connected to the frequency detection circuit, wherein the frequency detection circuit is connected to the switching device, the frequency detection circuit is configured to detect the conduction pulse width of the switching device, and the arithmetic circuit is configured to, in response to the conduction pulse width of the switching device meeting the predetermined condition, determine that the magnetron is in the over-temperature state and adjust the conduction pulse width of the switching device to bring the magnetron into the non-over-temperature state.

6. The driving power supply according to claim 1, wherein the processing circuit is configured to determine an operating voltage of the magnetron and correct the operating voltage of the magnetron according to the electrical parameter of the switching device, and determine, in response to the corrected operating voltage of the magnetron meeting the predetermined condition, that the magnetron is in the over-temperature state.

7. A heating device, comprising a magnetron and a driving power supply according to any one of claims 1 to 6, wherein the magnetron is connected to a secondary coil.

8. A microwave cooking appliance, comprising a heating device according to claim 7.

9. A control method for a driving power supply, wherein:
the driving power supply comprises a rectification filtering circuit and a frequency conversion circuit, wherein:
the frequency conversion circuit comprises a transformer and a switching device, wherein the transformer comprises a primary coil and a secondary coil, the switching device is connected to the primary coil, and the secondary coil is configured to be connected to a magnetron; and
the rectification filtering circuit is configured to be connected to an alternating-current power supply, and the primary coil is connected to the rectification filtering circuit; and
the control method comprises:
detecting an electrical parameter of the switching device; and
in response to the electrical parameter of the switching device meeting a predetermined condition, determining that the magnetron is in an over-temperature state and adjusting the electrical parameter of the switching device to bring the magnetron into a non-over-temperature state.

10. The control method according to claim 9, further comprises:
determining an operating voltage of the magnetron and correcting the operating voltage of the magnetron according to the electrical parameter of the switching device; and
determining that the magnetron is in the over-temperature state in response to the corrected operating voltage of the magnetron meeting the predetermined condition.
